# EUROPEAN PATENT SPECIFICATION

(11) **EP 1 659 021 B1**
(45) Date of publication and mention of the grant of the patent: **21.09.2011**
(21) Application number: 05077649.1
(22) Date of filing: 18.11.2005
(51) Int. Cl.: B60N 2/14

(54) **Lockable turntable for a seat**
Verriegelbare Drehscheibe für einen Sitz
Plateau tournant pour un siège

(30) Priority: 19.11.2004 DK 200400287 U
(43) Date of publication of application: 24.05.2006
(73) Proprietor: BE-GE JANY A/S, 7741 Frøstrup (DK)
(72) Inventor: Ostervig, Viggo, 7741 Frostrup (DK)
(74) Representative: Plougmann & Vingtoft A/S

(56) References cited:
- DE-A1- 2 828 503
- FR-A- 2 796 014
- JP-A- 9 048 269

## Description

### Field of the invention

This invention relates to a lockable turntable, preferably for auto chairs, which enables the chair/seat to rotate relative to the underframe around a vertical axis.

### Background of the invention

Turntables for fitting between auto chairs and their underframes are known. They are applied for two purposes: So that the passenger may change his sitting position relative to the vehicle, and so that the chair/seat without a person seated can be turned away from its normal position of use and thus take up less space in the vehicle. These turntables must be lockable so that the chair/seat does not rotate inappropriately when a person is sitting in the chair/seat. The total weight of the person and the chair/seat, and thus the force involved, especially in connection with a traffic accident, sets requirements on the strength of the locking mechanism. Various turntables that allegedly solve this problem are available on the market.

All known turntables for the objects described allegedly live up to the strength requirement, but have certain functional limitations. The locking device has a certain amount of wobble which due to the small diameter of the turntable relative to the size of the chair/seat is increased and causes the chair/seat, when the turntable is locked, to rock back and forth in its line of travel, thus giving less comfort. In addition, the height of the turntable contributes to the total height of the chair/seat, and thus the vertical distance from the seat cushion to the ceiling of the vehicle. As the floor-to-ceiling height in modern cars becomes lower and lower because of regard to appearance, aerodynamics etc., it is of course desirable that the turntable per se is as low as possible.

US 3322458 discloses a swivel seat for motor vehicle comprising a swivel structure that mounts a seat assembly for pivotal movement about a generally vertical axis. The swivel seat further comprises a latching assembly to selectively latch the seat assembly in a generally forwardly facing position or in a generally rearwardly facing position. However, US 3322458 does not solve the problem of wobble of the seat, and furthermore US 3322458 does not provide a turntable with a low height.

DE 28 28 503 discloses a turntable for vehicle seats with means for interconnecting a lower part with the seat according to the preamble of claim 1. The turntable is characterised in that a bottom part is situated between lateral edge zones and rails serving on a seat adjustment. An open recess extends upwards, and top support surfaces for an upper part are provided with a centre bore. A bolt engages with a recess of the lower part. However, DE 28 28 503 does not solve the problem of wobble of the seat, and furthermore DE 28 28 503 does not provide a turntable with a low height.

FR 2 796 014 discloses a rotational locking mechanism for a rotating plate relative to a fixed plate. The rotating plate is provided with teeth which penetrates a cavity in the fixed plate. Each tooth passes through passages in the rotating plate. Each tooth has a widened section so as to engage a finger separating the two passages and abuts against the transverse edges of the housing. However, FR 2 796 014 does not provide a turntable with a low height, and FR 2 796 014 does not solve the problem of enabling multiple and/or safe locking positions of the seat.

### Summary of the invention

Accordingly, the invention preferably seeks to mitigate, alleviate or eliminate one or more of the above mentioned disadvantages singly or in any combination. In particular, it may be seen as an object of the present invention to provide a turntable which reduces or eliminates the amount of wobbling of the seat. It may supplementary or alternatively be seen as an object of the present invention to provide a turntable that increases the vertical distance from the seat cushion to the ceiling of the vehicle by having a low height.

This object and several other objects may be obtained by a lockable turntable for chairs/seats; most preferably auto chairs/seats, said lockable turntable comprising a bottom disc attachable to an underframe, an inner flange attachable to a chair/seat, and an integrated locking device with self-adjusting wedge-shaped locking pawls which enable operation that is free of wobble. The lockable turntable is provided with a cam disc enabling a circular turning pattern of a release lever to be converted to a radial motion pattern of the locking pawls by curved grooves of the cam disc. Thus, the integrated locking device, comprising wedge-shaped locking pawls, is locked/unlocked by turning the release lever.

The invention is particularly, but not exclusively, advantageous for improving the comfort of a person sitting on a seat being mounted on the turntable because the person will experience a reduced amount of wobbling or even experience no wobbling at all. The wobbling may be reduced according to the integrated locking device comprising wedge-shaped locking pawls. The function of the release lever and the locking pawls makes it easy, even for the passenger, to turn and lock the lockable turntable.

It may be an advantage of the present invention that two latches mutually engage their respective locking points. In this way the load/strain is distributed to two locking points by the turntable locking device, whereby smaller and thinner latches may be used for the same degree of load, thus reducing the effective height of the turntable.

In an alternative embodiment of the lockable turntable the same spring is utilised for securing of the turntable in locked position, for self-adjusting of the locking pawls, and for enabling the turntable when rotated jumps from unlocked to locked position by itself when the locking points are reached.

It may an advantage that only one spring is used in the construction of the turntable thereby ensuring a simple construction and a low production price. Furthermore, the self-adjusting locking pawls may ensure that the turntable does not require any adjustments after some period of use thereby providing a consumer-friendly turntable, where the consumer-friendliness is also an important parameter of safety reasons because the turntable may not require adjustments in order to ensure optimum locking performance. It may be another advantage that the turntable jumps from an unlocked to a locked position by itself when the locking points are reached, thus avoiding the risk for not locking the turntable properly when rotating the release lever.

In a possible embodiment of the lockable turntable two or more locking pawls and locking points are utilised instead of a single, whereby the load is distributed to two or more locking points, thus reducing the height of the turntable while retaining the strength.

The strength of the turntable is important, because in a collision where the load on the locking system of the turntable increases dramatically, the locking system is required to remain fully locked so that the seat is not moved from its locked position even under high loads. On the other hand it may be important that the height of the turntable is as low as possible so that vertical distance from the seat cushion to the ceiling of the vehicle is not essentially decreased.

In another possible embodiment of the turntable the inner flange is contained within a cavity of the bottom disc so that an upper surface of the inner flange does not extend above an upper surface of an outer flange. Thereby the height of the turntable is reduced so that the turntable can be used in most types and brands of vehicles.

In an embodiment of the turntable at least two locking points are provided along an inner periphery of the bottom disc of the turntable.

It may be an advantage of the present invention that the principle of the turntable allows the number of locking points to be increased thereby increasing the number of locking positions. Furthermore, it may be an advantage of the present invention that the locking points are provided along an inner periphery because it may make a compact design of the turntable feasible.

In another embodiment the turntable is lockable without having the locking pawls protruding out of the faces of the turntable.

When no parts of the turntable protrudes out of the outer faces of the turntable a very attractive and saleable design is achieved, which furthermore may have the advantage that grease or lubricant applied to the locking pawls is not transferred to the outside of the turntable.

In a preferred embodiment of the turntable the locking mechanism comprising the locking pawls, the cam disc, the spring, and the locking points are contained within the inner periphery of the bottom disc of the turntable, thus providing a design of a turntable that may be made compact. A further advantage by having the locking mechanism within the inner periphery of the bottom disc of the turntable may be that no moving parts other than the release lever are placed outside the solid faces of the turntable, thereby avoiding smudging of the locking system which may affect the function of the turntable.

These and other aspects of the invention will be apparent from and described more in detail with reference to drawings and the embodiments described hereinafter

### Brief description of the figures

The present invention will now be explained, by way of example only, with reference to the accompanying figures, where
Fig. 1 shows the turntable when unlocked.
Fig. 2 shows the turntable 100 when locked.
Fig. 3 is a picture of the assembled and complete turntable 101.
Fig. 4 is an exploded view of the turntable 101 with all parts as well as the parts list.

### Detailed description of the invention

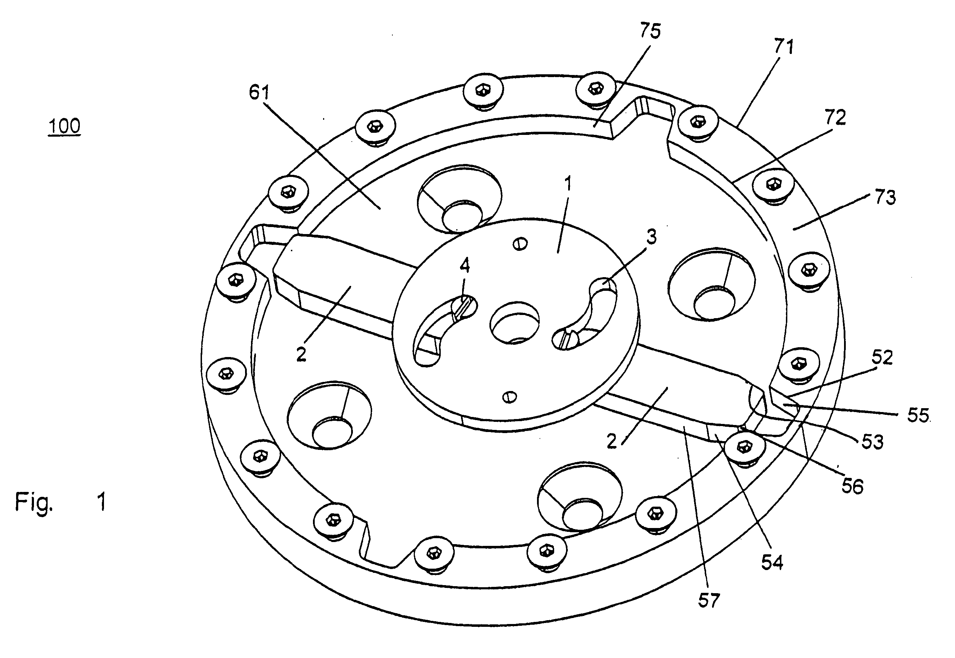

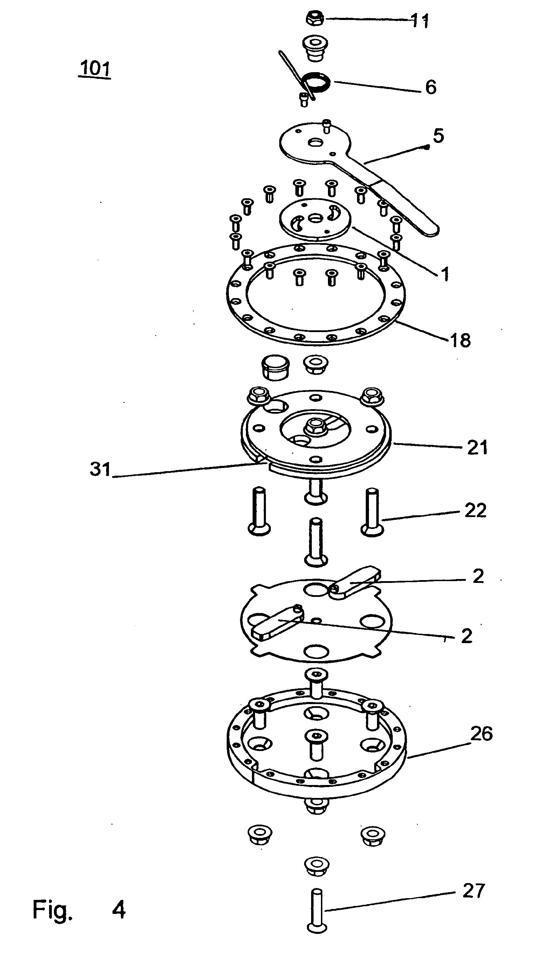

Fig. 4 shows the parts of the turntable 101 in an exploded view which will be explained in the following with reference to Figures 1-3. The turntable 100, 101 basically consists of discoid halves 21 and 26 which are rotatable relative to each other, and which are lockable in two or more locking points 52 along the inner periphery 72 by means of the two radial, wedge-shaped locking pawls 2. See enclosed figures and pictures.

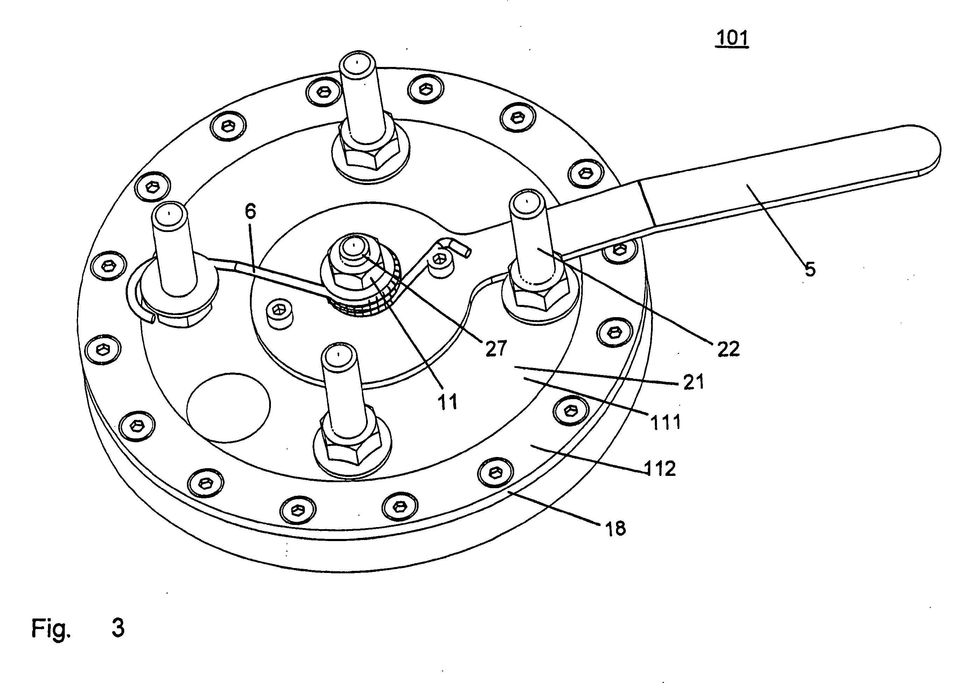

One of the discoid halves is the top disc (inner flange) 21 and the other discoid halve is the bottom disc 26. The bottom disc 26 is secured to the underframe, and the top disc 21 is secured to the chair/seat. The movement of the locking pawls 2 is controlled by a cam disc 1 (or eccentric disc, Fig. 1) which is rotated by a release lever 5 (Fig. 3).

The catch pin 4 (Fig. 1) on the locking pawls 2 moves in the curved grooves in the cam disc 3 (Fig. 1), whereby the circular movement of the release lever is converted to the linear movement of the locking pawls 2. Thus, the two locking pawls 2 are linearly displaceable along the longitudinal direction of the grooves 31 extending radially from the centre of the inner flange 21. Furthermore, the movement of the locking pawls are constrained to move in a plane parallel with the plane of the turntable 101, e.g. the plane of the upper surface 112 of the outer flange 18.

The spring 6 (Fig. 3) keeps the locking pawls 2 engaged in the locking points 52. Against the action of the spring the locking pawls 2 themselves go so far out in the wedge-shaped locking points 52 that the wobble disappears. Furthermore, the spring 6 makes the turntable self-locking, i.e. the turntable 101 jumps to a locked position if the chair on top is rotated from unlocked position until the locking points are reached.

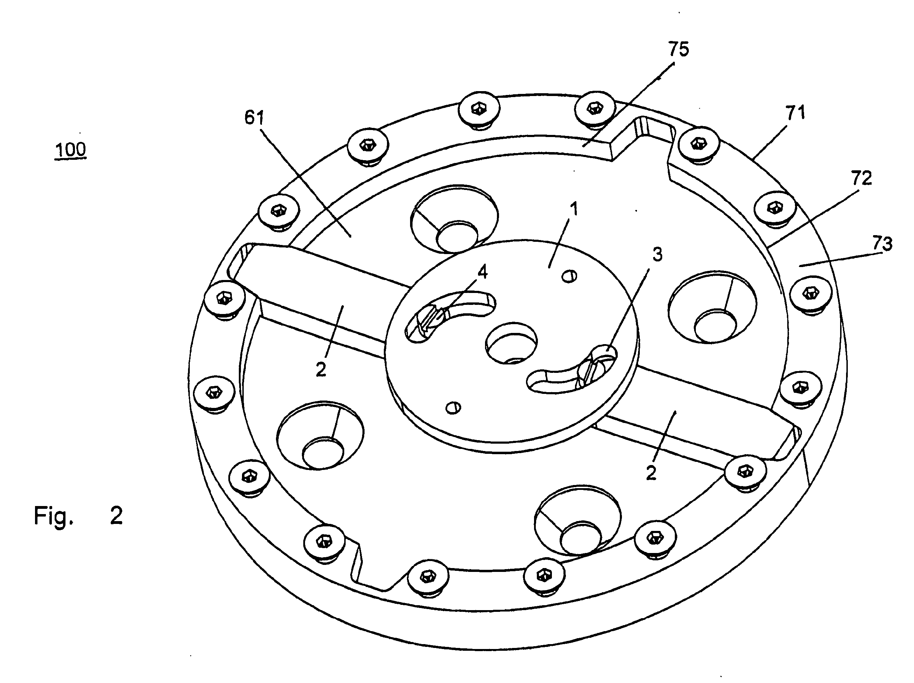

The turntable 101 is locked with self-adjusting, wedge-shaped locking pawls 2 (Fig. 1) which cause the wobble of the turntable 101 to disappear. Furthermore, a solution has been chosen where two locking pawls 2 mutually engage their respective locking points 52. In this way the load/strain is distributed to two locking points 52 by the turntable locking device, whereby smaller and thinner locking pawls 2 may be used for the same degree of load, thus reducing the effective height of the turntable 101. In fig. 2, the locking pawls 2 are engaged. Note that the inner flange 21 has been made transparent in order to show the method of function.

In the following the locking points 52 will be denoted both as locking points 52 as well as notches 52. Similarly the top disc 21 will be denoted both as a top disc 21 as well as an inner flange 21. In the above paragraph and the following paragraphs the term underframe should be understood as the underframe upon which the seat to be rotated is mounted. In fig. 1, the locking pawls do not engage the locking points 52. Note that the inner flange 21 has been made transparent in order to show the method of function.

The turntable 101 is fitted between the underframe and the chair. Due to its relatively small diameter it can be fitted in several places under the chair, the swing pattern of which can thus be changed. If the spring release lever 5 is pulled the locking points are disengaged enabling the chair/seat to be rotated around a vertical axis.

Turntables for use in vehicles must be made with sufficient constructive strength to form part of a chair/seat, which in this configuration thus lives up to the existing requirements for chairs/seats in vehicles, cf. EU directives 76/115 EEC & 74/408 EEC. Here the application is in vehicle category M1 which is subjected to the highest requirements of the directives.

Fig. 1 and Fig. 3 show that the locking mechanism comprising the locking pawls 2, the cam disc 1, the spring 13, and the notches 52 is contained within the outer periphery 71 of the ring-shaped member 73 of the bottom disc 26, and the openings of the notches 52 are placed along an inner periphery 72 of the bottom disc 26. Furthermore, the turntable is lockable without having the locking pawls 2 protruding out of the faces of the turntable.

The locking pawls 2 rotate together with the inner flange 21 which enables a construction wherein the locking pawls 2 (when they are in an un-engaged state as shown in Fig. 1) are contained within the inner periphery 72 of the ring-shaped member 73 of the bottom disc 26. When the locking pawls 2 are in an engaged state as shown in Fig. 2 the locking pawls 2 are contained within the outer periphery 71 of the ring-shaped member 73 of the bottom disc 26.

Fig. 3 shows that the locking mechanism comprising the locking pawls 2, the cam disc 1 and the notches 52 are shielded from the surroundings. That is, the locking pawls 2 are contained within the grooves 31 (Fig. 4), the notches 52 are shielded from the surroundings by the outer flange 18 (Fig. 3), and the cam disc 1 is shielded from the surroundings by the release lever 5. Therefore, any lubricant or grease applied to the locking pawls 2, the curved grooves 3 of the cam disc 1, and the notches 52 is prohibited from leaking from the turntable 101.

Fig. 1 shows that the locking pawls 2 have wedge-shaped ends 53 being adapted for engagement with the notches 52. Thus, when the wedge-shaped ends 53 of the locking pawls 2 engage into the notches 52 as shown in Fig. 2, the spring will force the facets 54 of the wedge-shaped ends 53 into contact with the facets 55 of the notch 52, thereby removing any clearance between the facets 54 and 55. Due to the spring-force-actuated contact between the locking pawls 2 and notches 52 the inner flange 21 is not able to rotate relative to the bottom disc 26 and therefore the person seated on the seat being mounted on the turntable 101 will not experience any backlash or wobble.

The slope of the facet 54, i.e. the slope relative to the facet 57, is preferably within the range from 5 to 25 degrees, and more preferred within the range from 10 to 20 degrees. In practice a slope of approximately 15 degrees has been found to be an optimum with respect to the locking capabilities of the locking pawls 2 and with respect to limiting any undesired travel of the locking pawls 2 when they are in the locked position as shown in Fig. 2.

The slopes of the facets 54 can be made slightly different than the slopes of the facets 55 for improving the contact between the locking pawls 2 and the notches 52, and for ensuring that the locking pawls 2 are easily disengageable from the notches 52. Furthermore, the ends 53 of the locking pawls 2 can have other shapes than wedge shapes, for instance they may have a triangular shape or a circular shape. Alternatively, the slopes of the facets 54 can equal to the slopes of the facets 55.

Fig. 1 shows that the ends of the locking pawls 2 have rounded edges 56. The purpose of the rounded edges 56 is firstly to reduce friction between the ends of the locking pawls 2 and the inner side 75 of the bottom disc 26, when the ends of the locking pawls 2 slide against the inner side 75 during rotation of the cam disc 1, and secondly to help the locking pawls 2 to jump into the notches 52 when the pawls 2 approaches the openings of the notches 52.

The principle with two locking pawls 2 and four notches 52 is not limited to the embodiment shown in Fig. 1. Thus, it is possible to have more than four notches 52, for instance six or even eight notches 52 can be machined in the bottom disc 26, thereby providing more locking positions of the seat. It is also possible to provide more than two locking pawls 2, for instance it is possible to design a turntable 100,101 with three, four or even 6 locking pawls 2. Clearly, if the turntable 100,101 is provided with three locking pawls 2 then at least three notches 52 are required, and if four locking pawls 2 are provided then at least four notches 52 are required. By providing more locking pawls 2 the load is distributed over more notches 52, whereby smaller and thinner locking pawls 2 may be used for the same degree of load, thus reducing the effective height of the turntable 100,101.

In an alternative embodiment the turntable 101 is provided with only one locking pawl 2, in which case the bottom disc 26 will have at least two notches 52.

Figures 1, 3 and 4 show that the inner flange 21 is contained within the cavity 61 of the bottom disc 26 so that height of the turntable 100,101 can be minimised. That is, the turntable 100,101 can be constructed so that the upper surface 111 of the inner flange 21 does not extend above the upper surface 112 of the outer flange 18. As such, the most protruding parts jutting out of a plane coincident with the upper surface 112 are the threaded ends of the screws 22, the self locking nut 11, the threaded end of the screw 27 and to some extent the release lever 5. Since the ends of the screws 22, the self locking nut 11 and the threaded end of the screw 27 may extend into the cavity of the bottom of the seat, the only space between the frame and the seat required for integrating the turntable 101 is determined by the total height of the bottom disc 26 and the outer flange 18. This enables a lower total height of the seat system comprising the underframe, the turntable 101 and the seat itself, so that the vertical distance from the seat cushion to the ceiling of the vehicle is kept at a maximum.

Fig. 4 shows that the all parts of the turntable 101 are easily machineable. That is, for instance such parts as the release lever 5, the cam disc 1 and locking pawls 2 may be machined in a single punching process. None of the parts of the turntable 101 shown in Fig. 4 (except the release lever 5 which may require bending or pressing) requires machining processes such as bending. Also, the holes and threads of all the parts of the turntable 101 can be machined in a single process without the need for turning the parts for machining holes in different directions. Thus, all parts of the turntable 101 are can be produced in such a way that the required machining time and therefore also the production costs are reduced.

Although the present invention has been described in connection with the specified embodiments, it is not intended to be limited to the specific form set forth herein. Rather, the scope of the present invention is limited only by the accompanying claims. In the claims, the term comprising does not exclude the presence of other elements or steps. In addition, singular references do not exclude a plurality. Thus, references to "a", "an", "first", "second" etc. do not preclude a plurality. Furthermore, reference signs in the claims shall not be construed as limiting the scope.

## Claims

1. Lockable turntable (100,101) for chairs/seats; most preferably auto chairs/seats, said lockable turntable comprising a bottom disc (26) attachable to an underframe, an inner flange (21) attachable to a chair/seat, and an integrated locking device with self-adjusting wedge-shaped locking pawls (2) which enable operation that is free of wobble, **characterised by** a circular turning pattern of a release lever (5) being converted to a radial motion pattern of the locking pawls (2) by curved grooves (3) of a cam disc (1).

2. Lockable turntable (100,101) according to claim 1, **characterised by** a same spring (6) for securing of the turntable (100,101) in locked position, for self-adjusting of the locking pawls (2), and for enabling the turntable (100,101) when rotated jumping from unlocked to locked position by itself when locking points (52) are reached.

3. Lockable turntable (100,101) according to claim 1 or 2, **characterised by** two or more locking pawls (2) and locking points (52), whereby the load is distributed to two or more locking points (52), for enabling the height of the turntable to be reduced while retaining the strength of the turntable.

4. A turntable (100,101) according to claim 1, wherein an inner flange (21) is contained within a cavity (61) of the bottom disc (26) for enabling an upper surface (111) of the inner flange (21) not to extend above an upper surface (112) of an outer flange (18).

5. A turntable (100,101) according to claim 1, wherein at least two locking points (52) are provided along an inner periphery (72) of the bottom disc (26) of the turntable (100,101).

6. A turntable (100,101) according to claim 1, wherein the turntable (100,101) is lockable without having the locking pawls (2) protruding out of the faces of the turntable.

7. A turntable (100,101) according to claim 1, wherein the locking mechanism comprising the locking pawls (2), the cam disc (1), the spring (6), and the locking points (52) are contained within the inner periphery (71) of the bottom disc (26) of the turntable (100,101).

## Patentansprüche

1. Feststellbare Drehscheibe (100,101) für Stühle/Sitze, am meisten bevorzugt Autostühle/-sitze, wobei die feststellbare Drehscheibe eine untere Scheibe (26) umfasst, die an einem Unterrahmen befestigbar ist, und einen Innenflansch (21), der an einem Stuhl/Sitz befestigbar ist, und eine eingebaute Feststellvorrichtung mit selbsteinstellbaren, keilförmigen Sperrklinken (2), die eine taumelfreie Benutzung ermöglichen, **dadurch gekennzeichnet, dass** ein kreisförmiges Drehmuster eines Ausrückhebels (5) durch gekrümmte Nuten (3) einer Kurvenscheibe (1) in ein radiales Bewegungsmuster der Sperrklinken (2) umgewandelt wird.

2. Feststellbare Drehscheibe (100,101) nach Anspruch 1, **dadurch gekennzeichnet, dass** dieselbe Feder (6) die Drehscheibe (100,101) in festgestellter Position sichert, die Selbsteinstellung der Sperrklinken (2) bewirkt und das Drehen der Drehscheibe (100,101) bewirkt, wobei sie von der nicht festgestellten Position in die Feststellposition springt, wenn Feststellpunkte (52) erreicht sind.

3. Feststellbare Drehscheibe (100,101) nach Anspruch 1 oder 2, **dadurch gekennzeichnet, dass** zwei oder mehr Sperrklinken (2) und Feststellpunkte (52) vorgesehen sind, wobei die Last auf zwei oder mehr Feststellpunkte verteilt wird, um eine Verkürzung der Höhe der Drehscheibe zu bewirken, während die Stärke der Drehscheibe bewahrt wird.

4. Feststellbare Drehscheibe (100,101) nach Anspruch 1, wobei ein Innenflansch (21) in einem Hohlraum (61) der unteren Scheibe (26) enthalten ist, um zu bewirken, dass sich eine obere Fläche (111) des Innenflansches (21) nicht über eine obere Oberfläche (112) eines Außenflansches (18) erstreckt.

5. Feststellbare Drehscheibe (100,101) nach Anspruch 1, wobei mindestens zwei Feststellpunkte (52) entlang eines Innenumkreises (72) der unteren Scheibe (26) der Drehscheibe (100,101) bereitgestellt sind.

6. Feststellbare Drehscheibe (100,101) nach Anspruch 1, wobei die Drehscheibe (100, 101) feststellbar ist, ohne dass die Sperrklinken (2) aus den Stirnflächen der Drehscheibe herausragen.

7. Feststellbare Drehscheibe (100,101) nach Anspruch 1, wobei der Feststellmechanismus umfassend die Sperrklinken (2), die Kurvenscheibe (1), die Feder (6) und die Feststellpunkte (52) im Innenumkreises (71) der unteren Scheibe (26) der Drehscheibe (100,101) enthalten ist.

## Revendications

1. Plaque tournante verrouillable (100, 101) destinée à des sièges/fauteuils, de préférence des sièges/fauteuils de voiture, ladite plaque tournante verrouillable comprenant un disque inférieur (26) pouvant être fixé sur un sous-châssis, une bride interne (21) pouvant être fixée sur un siège/fauteuil et un dispositif de verrouillage intégré muni de cliquets de verrouillage en forme de coin à réglage automatique (2) permettant un fonctionnement sans oscillations, **caractérisée par le fait qu'**un mode de rotation circulaire d'un levier de déverrouillage (5) est transformé en un mode de déplacement radial des cliquets de verrouillage (2) par des rainures incurvées (3) d'un disque à cames (1).

2. Plaque tournante verrouillable (100, 101) selon la revendication 1, **caractérisée par le fait qu'**un même ressort (6) maintient la plaque tournante (100, 101) en position verrouillée, assure réglage automatique des cliquets de verrouillage (2) et permet à la plaque tournante (100, 101) lors de sa rotation de passer d'elle-même d'une position déverrouillée à une position verrouillée quand des points de verrouillage (52) sont atteints.

3. Plaque tournante verrouillable (100, 101) selon la revendication 1 ou 2, **caractérisée par** la présence de deux ou plusieurs cliquets de verrouillage (2) et points de verrouillage (52), permettant de répartir la charge sur deux ou plusieurs points de verrouillage (52) pour permettre de réduire la hauteur de la plaque tournante tout en conservant la résistance de la plaque tournante.

4. Plaque tournante (100, 101) selon la revendication 1, dans laquelle une bride interne (21) est contenue dans une cavité (61) du disque inférieur (26) pour permettre à une surface supérieure (111) de la bride interne (21) de ne pas s'étendre au-dessus d'une surface supérieure (112) d'une bride externe (18).

5. Plaque tournante (100, 101) selon la revendication 1, dans laquelle au moins deux points de verrouillage (52) sont fournis le long d'une périphérie interne (72) du disque inférieur (26) de la plaque tournante (100, 101).

6. Plaque tournante (100, 101) selon la revendication 1, dans laquelle la plaque tournante (100, 101) peut être verrouillée sans que les cliquets de verrouillage (2) dépassent des faces de la plaque tournante.

7. Plaque tournante (100, 101) selon la revendication 1, dans laquelle le mécanisme de verrouillage comprenant les cliquets de verrouillage (2), le disque à cames (1), le ressort (6) et les points de verrouillage (52) est contenu dans la périphérie interne (71) du disque inférieur (26) de la plaque tournante (100, 101).
